Europäisches Patentamt

European Patent Office

Office européen des brevets

(19)

(11) Veröffentlichungsnummer: **0 312 757 B1**

(12) **EUROPÄISCHE PATENTSCHRIFT**

(45) Veröffentlichungstag der Patentschrift:
11.07.90

(51) Int. Cl.⁵: **C01B 3/38**, B01J 8/02

(21) Anmeldenummer: 88114745.8

(22) Anmeldetag: 09.09.88

(54) Reformer, insbesondere autothermer Sekundärreformer.

(30) Priorität: 17.10.87 DE 3735193

(43) Veröffentlichungstag der Anmeldung:
26.04.89 Patentblatt 89/17

(45) Bekanntmachung des Hinweises auf die Patenterteilung:
11.07.90 Patentblatt 90/28

(84) Benannte Vertragsstaaten:
BE DE FR GB IT NL

(56) Entgegenhaltungen:
DE-A- 1 542 539
GB-A- 895 038
US-A- 4 152 407

(73) Patentinhaber: Uhde GmbH, Friedrich-Uhde-Strasse 15,
D-4600 Dortmund 1(DE)

(72) Erfinder: Severin, Manfred, Dipl.-Ing., Am
Wiesenberge 23, D-5840 Schwerte(DE)
Erfinder: Herbort, Hans-Joachim, Dipl.-Ing.,
Unnaerstrasse 65B, D-5758 Fröndenberg(DE)

(74) Vertreter: Patentanwälte Meinke und Dabringhaus
Dipl.-Ing. J. Meinke Dipl.-Ing. W. Dabringhaus,
Westenhellweg 67, D-4600 Dortmund 1(DE)

## Beschreibung

Die Erfindung richtet sich auf einen Reformer, insbesondere autothermen Sekundärreformer mit einer zentrisch von unten durch den Katalysator hindurch in eine Misch- bzw. Reaktionskammer geführten Gaszuführung und einer Oxidationsmittelzuführung.

Ein derartiger Reformer ist durch die DE-A 15 42 539 der Anmelderin bekannt. Bei diesem Reformer wird das zu reformierende Gas von unten durch auf dem Gewölbe einer Sammelkammer stehenden Katalysator hindurch bis in den Kopfbereich des Reformers geleitet. In diesen Kopfbereich der Misch- bzw. Reaktionskammer wird dann das Oxidationsmittel eingespeist. Ein wesentlicher Vorteil dieser bekannten Technologie besteht darin, daß die Reformer sehr viel vorteilhafter gebaut werden können, sie müssen insbesondere nicht mit aufwendigen Kuppelkonstruktionen versehen sein, wie dies z.B. die DE-A 28 41 127 zeigt. Die Sammelkammer unterhalb der Katalysatoren mit einem gasdurchlässigen Stützgewölbe kann statisch günstiger errichtet werden, da die zentrale Durchführung des zu reformierenden Gases dies möglich macht.

Ein Nachteil der bekannten Konstruktion besteht allerdings darin, daß zu Reparaturarbeiten, zur Revision und dgl. die obere Abdeckhaube entfernt und das in die Misch- bzw. Reak tionskammer ragende und diese praktisch durchsetzende zentrische Gaszuführungsrohr entfernt werden muß, um einen Einstieg möglich zu machen. Darüber hinaus muß bei einer erneuten Montage des zentrischen Gaszuführungsrohres dieses ohne Einsichtmöglichkeit in der Verbindungsstelle, nämlich der Trennebene im Bereich der Katalysatoroberfläche eingebaut werden, was besondere Führungs- und Zentrierungsmaßnahmen notwendig macht.

Aufgabe der Erfindung ist daher die Schaffung einer Lösung, mit der unter Beibehaltung der Vorteile des bekannten Reformers die Konstruktion weiter vereinfacht und insbesondere ein leichter Zugang zur Misch- bzw. Reaktionskammer ermöglicht wird.

Mit einem Reformer der eingangs bezeichneten Art wird diese Aufgabe gemäß der Erfindung dadurch gelöst, daß die Oxidationsmittelzuführung ebenfalls von unten durch den Katalysator hindurch geführt ist, wobei die Gas- und die Oxidationsmittelzuführung im Anfangsbereich der Reaktionskammern enden.

Mit der Erfinding wird eine Reihe wesentlicher Vorteile erreicht. Zum einen ist die Misch- bzw. Reaktionskammer selbst im wesentlichen ohne Einbauten ausführbar, was deren Gestaltung stark vereinfacht. Damit ist sie auch einfach begehbar, ohne daß Elemente aus dem Einstiegsbereich in die Kammer entfernt werden müßten. Zum anderen lassen sich gerade durch die synchrone Zuführung von Reaktionsgas und Oxidationsmittel alle die damit verbundenen Vorteile erreichen, z.B. kann eine intensive Vermischung der Reaktanten erreicht werden. Auch sind Brennerkonstruktionen etwa nach der DE-C 28 41 127 nicht mehr notwendig.

In Ausgestaltung ist vorgesehen, daß die Oxidationsmittelzuführung konzentrisch in der Gaszuführung angeordnet ist. Mit dieser Gestaltung ist es möglich, die Gaszuführung einschließlich der Oxidationsmittelzuführung als ein vorgefertigtes Bauteil einzubauen, was die Montage und Konstruktion des Reformers ganz erheblich erleichtert.

Zweckmäßig kann es sein, die Oxidationsmittelzuführung aus einzelnen Zuführlanzen zu bilden und/oder mit einer eigenen thermischen Isolierung zu versehen, wie dies die Erfindung ebenfalls vorsieht. Dabei können alternativ einzelne Zuführlanzen je Reformer vorgesehen sein, zweckmäßig sind aber eine Mehrzahl von Zuführlanzen in der zentrischen Gaszuführung angeordnet, so auch Zuführlanzen für weitere Gase. Geht man nämlich davon aus, daß als Oxidationsmittel neben Sauerstoff und Luft auch $CO_2$ und Dampf eingesetzt werden können, so können als weitere Gase, z.B. zur Verdünnung oder zur Reaktionsführung, Erdgas oder auch $CO_2$ eingesetzt werden und dgl. mehr.

Vorteilhaft ist es, wenn die freien Enden der Oxidationsmittelzuführung mit im Winkel angestellten Auslaßdüsen versehen sind, um eine innige Vermischung der Reaktanten zu erreichen, es kann aber auch vorgesehen sein, die Gaszuführung selbst an ihrem Auslaßende mit einer Düse und/oder mit einem drallgebenden Element zu versehen, um eine gute Verwirbelung in der Misch- bzw. Reaktionskammer zu erreichen.

Schließlich liegt eine Ausgestaltung der Erfindung darin, daß das Beaufschlagungselement des Oxidationsmittels auf die einzelnen Zuführlanzen mit einer weiteren Zuführung für Dampf und/oder $CO_2$ oder dgl. ausgerüstet ist. Eine derartige Gestaltung bietet sich insbesondere dann an, wenn beispielsweise die einzelnen Zuführleitungen an ihrem Unterende über eine Ringleitung gespeist werden. Diese Ringleitung kann dann ein Verdünnungsmittel, wie z.B. Dampf oder $CO_2$, direkt zugeführt werden.

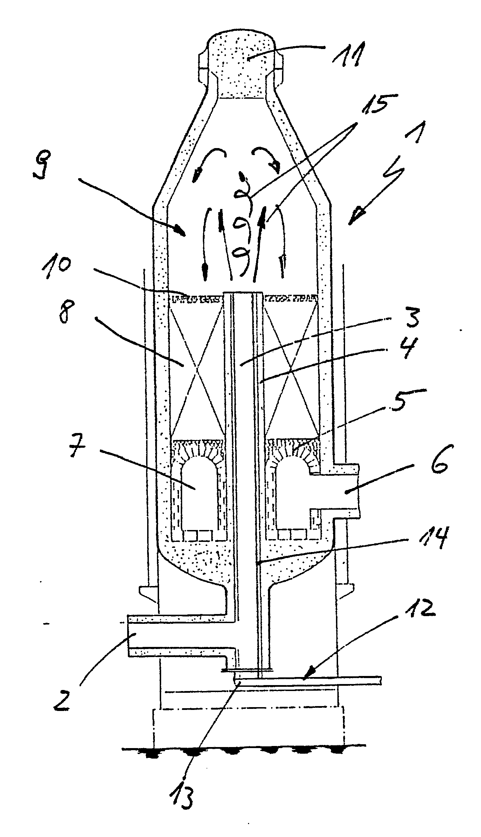

Die Erfindung ist nachstehend anhand der Zeichnung beispielsweise näher erläutert. Diese zeigt in der einzigen Figur eine Prinzipdarstellung eines Reformers nach der Erfindung.

Der allgemein mit 1 bezeichnete Reformer weist eine untere isolierte Gaszuführung 2 zu einem zentrischen Rohr 3 auf, welches außen und/oder innen mit einer Isolierung 4 versehen ist. Dieses Zentralrohr 3 durchsetzt zentrisch von unten nach oben eine mit einem Stützgewölbe 5 und einem Auslaßstutzen 6 für das Synthesegas versehene Sammelkammer 7, wobei das Stützgewölbe 5, die Sammelkammer 7 gasdurchlässig ausgebildet ist. Danach durchsetzt das Zentralrohr 3 einen andeutungsweise wiedergegebene Katalysator 8, der z.B. als Schüttung aus Katalysatorgranulat gebildet sein kann, um schließlich in einer oberen Misch- bzw. Reaktionskammer 9 im Bereich der Katalysatoreintrittsebene 10 zu enden. Die Misch- bzw. Reaktionskammer 9 ist oben von einem Revisionsdeckel 11 abgeschlossen.

Wesentlich für die Erfindung ist, daß das Zentralrohr 3 der Gaszuführung gleichzeitig mit einer Oxidationsmittelzuführung versehen ist, diese ist allgemein mit 12 bezeichnet. Im dargestellten Beispiel soll von einem unteren Zentralrohr über eine Ringkammer 13 eine Mehrzahl von Zuführlanzen 14 beaufschlagt werden, die am Außenumfang des Zentralrohres 3 in dessen Inneren angeordnet sind und mit einer eigenen Isolierung versehen sein können.

Auch diese Zuführlanzen 14 enden mit dem Zentralrohr 3, etwa in der Katalysatoreintrittsebene 10. Andeutungsweise durch Pfeile 15 ist die Strömung in der Mischkammer 9 dargestellt, ohne daß damit das zutreffende Strömungsverhalten abgebildet wäre.

Natürlich ist das beschriebene Ausführungsbeispiel der Erfindung noch in vielfacher Hinsicht abzuändern, ohne den Grundgedanken zu verlassen. So kann statt einer Reihe von Zuführlanzen auch eine zentrische Einzellanze vorgesehen sein, es können neben der Oxidationsmittelzufuhr weitere Gase zentrisch eingeleitet werden, die Kontur der Mischkammer 9 kann von der dargestellten abweichen und dgl. mehr. Nicht dargestellt sind auch Düsen am freien Ende sowohl des Zentralrohres 3 als auch der Zuführlanzen 14, mit denen ein gewünschtes Strömungsverhalten in der Mischkammer 9 erreicht werden kann.

**Patentansprüche**

1. Reformer, insbesondere autothermer Sekundärreformer, mit einer zentrisch von unten durch den Katalysator hindurch in eine Misch- bzw. Reaktionskammer geführten Gaszuführung und einer Oxidationsmittelzuführung,
dadurch gekennzeichnet,
daß die Oxidationsmittelzuführung (12) ebenfalls von unten durch den Katalysator (8) hindurch geführt ist, wobei die Gas- (3) und die Oxidationsmittelzuführung (12) im Anfangsbereich (10) der Reaktionskammer enden.

2. Reformer nach Anspruch 1,
dadurch gekennzeichnet,
daß die Oxidationsmittelzuführung (12,14) konzentrisch in der Gaszuführung (3) angeordnet ist.

3. Reformer nach Anspruch 1,
dadurch gekennzeichnet,
daß die Oxidationsmittelzuführung aus einzelnen Zuführlanzen (14) gebildet ist.

4. Reformer nach Anspruch 1,
dadurch gekennzeichnet,
daß die Oxidationsmittelzuführlanzen (14) mit einer eigenen thermischen Isolierung versehen sind.

5. Reformer nach einem der vorangehenden Ansprüche,
dadurch gekennzeichnet,
daß die freien Enden der Oxidationsmittelzuführung (14) mit im Winkel angestellten Auslaßdüsen versehen sind.

6. Reformer nach einem der vorangehenden Ansprüche,
dadurch gekennzeichnet,
daß die zentrische Gaszuführung (3) an ihrem Auslaßende mit einer Düse ausgerüstet ist.

7. Reformer nach Anspruch 6,
dadurch gekennzeichnet,
daß die Auslaßdüse mit einem drallgebenden Element versehen ist.

8. Reformer nach einem der vorangehenden Ansprüche,
dadurch gekennzeichnet,
daß neben der oder den Oxidationsmittelzuführlanzen (14) mindestens eine Lanze zur Zuführung eines weiteren Gases vorgesehen ist.

9. Reformer nach einem der vorangehenden Ansprüche,
dadurch gekennzeichnet,
daß das Beaufschlagungselement (13) des Oxidationsmittels auf die einzelnen Zuführlanzen (14) mit einer weiteren Zuführung für Dampf und/oder $CO_2$ oder dgl. ausgerüstet ist.

**Revendications**

1. Appareil de reformage, en particulier de reformage autothermique secondaire, présentant une arrivée de gaz débouchant centralement par en bas dans une chambre respective de mélangeage ou de réaction, en traversant le catalyseur, ainsi qu'une arrivée d'agent d'oxydation, caractérisé par le fait que l'arrivée (12) d'agent d'oxydation traverse elle aussi le catalyseur (8) par en bas, les arrivées respectives de gaz (3) et d'agent d'oxydation (12) s'achevant dans la région initiale (10) de la chambre de réaction.

2. Appareil de reformage selon la revendication 1, caractérisé par le fait que l'arrivée (12, 14) d'agent d'oxydation est disposée concentriquement dans l'arrivée (3) de gaz.

3. Appareil de reformage selon la revendication 1, caractérisé par le fait que l'arrivée d'agent d'oxydation est constituée par des lances d'arrivée individuelles (14).

4. Appareil de reformage selon la revendication 1, caractérisé par le fait que les lances (14) d'arrivée d'agent d'oxydation sont munies d'une isolation thermique propre.

5. Appareil de reformage selon l'une des revendications précédentes, caractérisé par le fait que les extrémités libres de l'arrivée (14) d'agent d'oxydation sont pourvues de buses de sortie agencées avec inclinaison.

6. Appareil de reformage selon l'une des revendications précédentes, caractérisé par le fait que l'arrivée centrale (3) de gaz est équipée d'une buse à son extrémité sortie.

7. Appareil de reformage selon la revendication 6, caractérisé par le fait que la buse de sortie est munie d'un élément à effet tourbillonnaire.

8. Appareil de reformage selon l'une des revendications précédentes, caractérisé par le fait qu'au moins une lance est prévue, outre la ou les lance(s) (14) d'arrivée d'agent d'oxydation, pour l'arrivée d'un gaz supplémentaire.

9. Appareil de reformage selon l'une des revendications précédentes, caractérisé par le fait que l'élément (13) faisant agir l'agent d'oxydation sur les lances d'arrivée individuelles (14) est équipé d'une arrivée supplémentaire de vapeur et/ou de $CO_2$ ou substance similaire.

**Claims**

1. A reformer, in particular an autothermal secondary reformer, comprising a gas feed which is passed centrally from below through the catalyst into a mixing and reaction chamber, and an oxidising agent feed, characterised in that the oxidising agent feed (12) is also passed through the catalyst (8) from below, wherein the gas feed (3) and the oxidising agent feed (12) terminate in the initial region (10) of the reaction chamber.

2. A reformer according to claim 1 characterised in that the oxidising agent feed (12, 14) is arranged concentrically in the gas feed (3).

3. A reformer according to claim 1 characterised in that the oxidising agent feed is formed from individual feed lances (14).

4. A reformer according to claim 1 characterised in that the oxidising agent feed lances (14) are provided with their own thermal insulation.

5. A reformer according to one of the preceding claims characterised in the free ends of the oxidising agent feed (14) are provided with outlet nozzles which are set at an angle.

6. A reformer according to one of the preceding claims characterised in that the central gas feed (3) is provided with a nozzle at its outlet end.

7. A reformer according to claim 6 characterised in that the outlet nozzle is provided with a swirl-producing element.

8. A reformer according to one of the preceding claims characterised in that, besides the oxidising agent feed lance or lances (14), there is provided at least one lance for feeding a further gas.

9. A reformer according to one of the preceding claims characterised in that the element (13) for admission of the oxidising agent to the individual feed lances (14) is provided with a further feed for steam and/or $CO_2$ or the like.